Europäisches Patentamt

European Patent Office

Office européen des brevets

(11) Veröffentlichungsnummer: **0 337 077 B1**

# EUROPÄISCHE PATENTSCHRIFT

(45) Veröffentlichungstag der Patentschrift: **09.12.92**

(51) Int. Cl.⁵: **F16F 7/10**, G10K 11/16

(21) Anmeldenummer: **89102613.0**

(22) Anmeldetag: **16.02.89**

(54) **Vorrichtung zur Dämpfung von Luft- und Körperschallschwingungen.**

(30) Priorität: **13.04.88 DE 3812224**

(43) Veröffentlichungstag der Anmeldung:
**18.10.89 Patentblatt 89/42**

(45) Bekanntmachung des Hinweises auf die
Patenterteilung:
**09.12.92 Patentblatt 92/50**

(84) Benannte Vertragsstaaten:
**DE FR GB NL**

(56) Entgegenhaltungen:
**DE-A- 3 113 268**
**DE-A- 3 300 499**
**FR-A- 2 300 384**
**FR-A- 2 445 436**

(73) Patentinhaber: **Messerschmitt-Bölkow-Blohm
Gesellschaft mit beschränkter Haftung
Robert-Koch-Strasse
W-8012 Ottobrunn(DE)**

(72) Erfinder: **Bschorr, Oskar, Dr.
Keplerstrasse 11
W-8000 München 80(DE)**

**Beschreibung**

Die Erfindung betrifft eine Vorrichtung zur Dämpfung von Luft- und Körperschallschwingungen.

Zur Bedämpfung von Körperschallschwingungen sind sogenannte Resonanzabsorber bekannt (DE-A-21 63 798), bei denen einseitig eingespannte Metallzungen mit dem zu bedämpfenden Körper kraftschlüssig verbunden werden und durch Körperschallschwingungen in ihrer Resonanzfrequenz angeregt werden. Die Schwingungen der Resonanzzungen werden durch Einbettung in eine Dämpfungsmasse gedämpft.

Weiterhin sind zur Dämpfung von Luftschallschwingungen Helmholtz-Resonatoren allgemein gebräuchlich, die im wesentlichen aus einer druckfesten Kammer bestehen, die mit der Umgebung durch eine schmale Öffnung, den sogenannten "Helmholtz-Hals", in Verbindung stehen.

Die obengenannten Dämpfungsvorrichtungen haben jeweils den Nachteil, daß sie entweder nur auf Körperschallschwingungen des zu bedämpfenden Gegenstandes oder auf bereits vom Gegenstand abgestrahlte Luftschallschwingungen reagieren und entsprechend dämpfend wirken.

Aufgabe der Erfindung ist es eine Vorrichtung zur Dämpfung sowohl von Luftschall als auch von Körperschallschwingungen zu schaffen. Diese Aufgabe wird durch eine nach den kennzeichnenden Merkmalen des Patentanspruchs 1 ausgebildete Vorrichtung gelöst.

Die Erfindung nutzt die Gehäusemasse eines Helmholtz-Resonators als Schwingmasse für einen Körperschallresonator, wobei die durch den Helmholtz-Resonator einschlossene Luft bei Schwingungen der federelastischen Wandung periodisch durch den Helmholtz-Hals strömt und aufgrund des Strömungswiderstandes zu einer Dämpfung der Schwingung führt. Die Baumasse des Helmholtz-Resonators wird dadurch doppelt genutzt. Werden die Resonanzfrequenzen des Helmholtz-Resonators für Luftschallschwingungen sowie für Körperschallschwingungen durch entsprechende Dimensionierung der Abmessungen bzw. der elastischen Eigenschaften der als Feder wirkenden Wandung auf denselben Betrag abgestimmt, so kann dadurch bei gleicher Wirksamkeit das Bauvolumen des Helmholtz-Resonators kleiner sein als bei herkömmlichen Helmholtz-Resonatoren.

Im folgenden wird die Erfindung anhand der in den Figuren teilweise schematisch dargestellten Ausführungsbeispiele näher beschrieben. Es zeigen:

Fig. 1    einen Querschnitt durch einen zylindrischen Helmholtz-Resonator mit federelastischer Stirnfläche

Fig. 2    einen Querschnitt durch einen zylindrischen Helmholtz-Resonator mit federelastischer Mantelfläche

Fig. 3    einen Querschnitt durch einen zylindrischen Helmholtz-Resonator mit flexibler Stirnfläche und interner Stützfeder

Fig. 4    einen Helmholtz-Resonator gemäß Figur 1 mit zusätzlichen resistive Bohrungen

Fig. 5    eine Mehrfachanordnung von konzentrisch angeordneten Helmholtz-Resonatoren unterschiedlicher Resonanzfrequenzen.

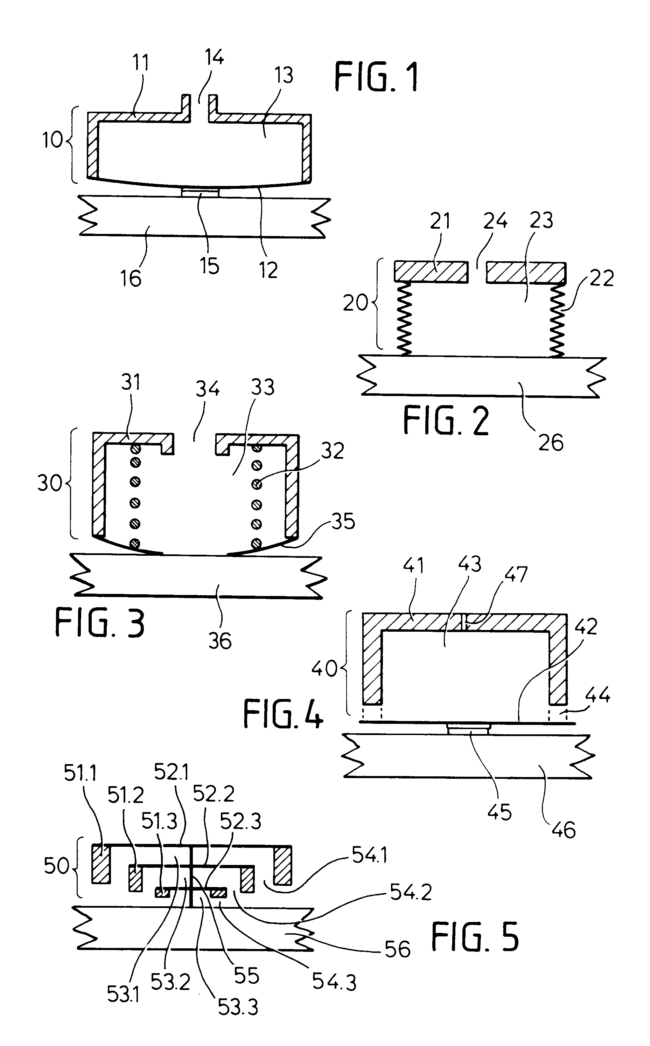

Der in Figur 1 dargestellte Helmholtz-Resonator 10 weist eine druckfeste, topfartige Wandung 11 auf, die in Richtung auf auftreffende Luftschallschwingungen eine Öffnung 14, den sogenannten Helmholtz-Hals, besitzt und deren eingeschlossenes Luftvolumen 13 durch eine federelastische Wandung 12, z.B. aus dünnem Stahlblech, abgeschlossen ist. Dieser Helmholtz-Resonator 10 ist in der Mitte der Wandung 12 über ein Distanzstück 15 kraftschlüssig mit dem zu bedämpfenden Gegenstand 16 verbunden. Körperschallschwingungen des Gegenstandes 16 werden über das Distanzstück 15 auf die federelastische Wandung 16 übertragen und führen im Resonanzfall zu einer Schwingung des gesamten Helmholtz-Resonators 10 gegenüber dem Gegenstand 16. Die dadurch bewirkten Volumenänderungen des eingeschlossenen Luftvolumens 13 müssen über die Öffnung 14 ausgeglichen werden, wobei der Strömungswiderstand zu einer Dämpfung dieser Schwingung führt. Auf diese Weise werden Körperschallschwingungen von dem Gegenstand abgezogen und bedämpft.

Gegenüber Luftschall wirkt der Helmholtz-Resonator in der bekannten Weise. Luftschallschwingungen, die die Resonanzfrequenz des aus der Gehäusewandung 11 sowie der federelastischen Wandung 12 bestehenden Masse-Feder-Systems aufweisen, regen dieses System ebenfalls zu Schwingungen an, wodurch eine zusätzliche Umwandlung von Schwingungsenergie in (innere) Reibung erfolgt.

Bei dem in Figur 2 dargestellten Ausführungsbeispiel ist lediglich eine Stirnfläche 21 des zylindrischen Helmholtz-Resonators 20 massiv ausgebildet und wirkt als Schwingmasse. Diese Stirnfläche 21 weist eine Öffnung 24 als "Helmholtz-Hals" auf und ist über einen Federbalg 22 direkt mit dem zu bedämpfenden Gegenstand 26 kraftschlüssig verbunden. Die Stirnfläche 21, der Federbalg 22 sowie die an den Federbalg 22 angrenzende Wandung des Gegenstandes 26 schließen wiederum ein Luftvolumen 23 ein, welches sich bei Schwingungen der Stirnfläche 21 lediglich über die Öffnung 24 ausgleichen kann.

Der in Figur 3 dargestellte Helmholtz-Resonator 30 besitzt eine als Schwingmasse wirkende druckfeste Gehäusewand 31, die etwa derjenigen in Figur 1 entspricht. Die Wandung 31 ist über eine flexible Wandung 35 gasdicht und mit einem zu bedämpfenden Gegenstand 36 verbunden, so daß wiederum ein abgeschlossenes Luftvolumen 33 entsteht, welches sich bei Druckunterschieden lediglich über die Öffnung 34 ausgleichen kann. Über eine interne Schraubenfeder 32 wird die flexible Wandung 35 gespannt. Die Feder 32 stützt sich einerseits gegen die Innenseite der Wandung 31 und andererseits gegen den zu bedämpfenden Gegenstand 36 ab. Dadurch werden Körperschallschwingungen des Gegenstandes 36 über die Feder 32 auf die dann als Schwingmasse wirkende Wandung 31 des Helmholtz-Resonators 30 übertragen.

Der in Figur 4 dargestellte Helmholtz-Resonator ist im Prinzip wie derjenige in Figur 1 aufgebaut, weist jedoch seitliche "Helmholtz-Hälse" 44 auf sowie eine zusätzliche, restistive Bohrung 47 auf. Diese Bohrung 47 ist verglichen mit dem "Helmholtz-Hals" 44 eng, so daß darin die Reibung der in dieser Bohrung strömenden Luftmenge dominiert und bewirkt somit eine zusätzliche Dämpfung des Helmholtz-Resonators.

Bei dem in Figur 5 dargestellten Ausführungsbeispiel sind drei Helmholtz-Resonatoren konzentrisch ineinander geschachtelt, wobei die jeweiligen druckfesten und als Schwingmasse wirkenden Wandungen 51.1, 51.2 und 51.3 als konzentrische Ringe ausgebildet sind. Die jeweiligen federelastischen Wandungen 52.1, 52.2 und 52.3 sind über ein gemeinsames Befestigungs- und Distanzstück 55 sowohl miteinander als auch mit dem zu bedämpfenden Gegenstand 56 kraftschlüssig verbunden. Die ringförmigen Spalte zwischen den Wandungen 51.1, 51.2 und 51.3 dienen als "Helmholtz-Hals" 54.1, 54.2 und 54.3 durch die die eingeschlossenen Luftvolumina 53.1, 53.2 und 53.3 mit der Umgebung in Verbindung stehen. Die Resonanzfrequenzen der einzelnen Untersysteme dieses Helmholtz-Resonators sind gestaffelt und können z.B. auf die einzelnen Resonanzfrequenzen des zu bedämpfenden Gegenstandes 56 abgestimmt sein.

## Patentansprüche

1. Vorrichtung zur Dämpfung von Luft- und Körperschallschwingungen, mit einem Helmholtz-Resonator (10, 20, 30, 40, 50), dessen Wandungen ein Luftvolumen einschließen, welches mit der Umgebung durch eine schmale Öffnung (14, 24, 34, 44, 54.1, 54.2, 54.3) in Verbindung steht, wobei zumindest eine Wandung (12, 22, 32, 42, 52.1, 52.2, 52.3) federelatisch ausgebildet und mit einem zu bedämpfenden Gegenstand (16, 26, 36, 46, 56) kraftschlüssig verbunden ist, derart, daß der Helmholtz-Resonator mit der federelastischen Wandung ein schwingfähiges Masse-Feder-System bildet, bei welchen die Wandungen des Helmholtz-Resonators als Schwingungsmasse (11, 21, 31, 41, 51.1, 51.2, 51.3) wirken.

2. Vorrichtung nach Anspruch 1, **dadurch gekennzeichnet,** daß die Resonanzfrequenzen des Helmholtz-Resonators (10, 20, 30, 40) bei Luft- und Körperschallschwingungen gleich sind.

3. Vorrichtung nach Anspruch 1 oder 2, **dadurch gekennzeichnet,** daß die Öffnungen (14, 24, 34, 44, 54.1, 54.3) des Helmholtz-Resonators (10, 20, 30, 40, 50) eine Folienabdeckung gegen Verschmutzung aufweisen.

4. Vorrichtung nach einem der Ansprüche 1 bis 3, **gekennzeichnet** durch eine Anordnung mehrerer Helmholtz-Resonatoren (50), deren Resonanzfrequenzen auf diejenigen des zu bedämpfenden Gegenstandes (56) abgestimmt sind.

## Claims

1. A device for damping acoustic vibrations transmitted by air and by solid bodies, with a Helmholtz resonator (10, 20, 30, 40, 50), the walls of which enclose a volume of air which communicates with the ambiency through a narrow aperture (14, 24, 34, 44, 54.1, 54.2, 54.3), at least one wall (12, 22, 32, 42, 52.1, 52.2, 52.3) being elastically resilient in design and being connected in a force-locking manner to an object (16, 26, 36, 46, 56) that is to be damped in such a way that the Helmholtz forms, with the elastically resilient wall, a mass/spring system which is able to vibrate, in the case of which the walls of the Helmholtz resonator act as vibration mass (11, 21, 31, 41, 51.1, 51.2, 51.3)

2. A device according to claim 1, characterised in that the resonance frequencies of the Helmholtz resonator (10, 20, 30, 40) are identical in the case of sound vibrations conducted through air and solids.

3. A device according to claim 1 or 2, characerised in that the apertures (14, 24, 34, 44, 54.1, 54.2, 54.3) of the Helmholtz resonator (10, 20, 30, 40, 50) have a foil covering against contamination.

4. A device according to one of claims 1 to 3, characterised by an arrangement of several Helmholtz resonators (50), the resonance frequencies of which are harmonised with those of the object (56) that is to be damped.

**Revendications**

1. Dispositif d'amortissement de vibrations acoustiques aériennes et de vibrations acoustiques de structures, comprenant un résonateur de Helmholtz (10, 20, 30, 40, 50) dont les parois renferment un volume d'air qui est en relation avec l'environnement par une ouverture étroite (14, 24, 34, 44, 54.1, 54.2, 54.3), au moins une paroi (12, 22, 32, 42, 52.1, 52.2, 52.3) étant élastique et reliée par adhérence à un objet (16, 26, 36, 46, 56) devant être amorti, de sorte que le résonateur de Helmholtz forme avec la paroi élastique un système masse-ressort capable de vibrer, dans lequel les parois du résonateur de Helmholtz agissent en tant que masse oscillante (11, 21, 31, 41, 51.1, 51.2, 51.3).

2. Dispositif selon la revendication 1, caractérisé par le fait que, pour des vibrations acoustiques aériennes et de structures, les fréquences de résonance du résonateur de Helmholtz (10, 20, 30, 40) sont les mêmes.

3. Dispositif selon la revendication 1 ou 2, caractérisé par le fait que les ouvertures (14, 24, 34, 44, 54.1, 54.2, 54.3) du résonateur de Helmholtz (10, 20, 30, 40, 50) sont recouvertes par une feuille pour les protéger contre les salissures.

4. Dispositif selon l'une des revendications 1 à 3, caractérisé par un arrangement de plusieurs résonateurs de Helmholtz (50) dont les fréquences de résonance sont accordées à celles de l'objet (56) devant être amorti.

FIG. 1

FIG. 2

FIG. 3

FIG. 4

FIG. 5